(19) Europäisches Patentamt
European Patent Office
Office européen des brevets

(11) **EP 1 598 742 B1**

(12) **EUROPEAN PATENT SPECIFICATION**

(45) Date of publication and mention
of the grant of the patent:
**16.01.2008 Bulletin 2008/03**

(51) Int Cl.:
***G06F 13/38*** *(2006.01)*

(21) Application number: **04257161.2**

(22) Date of filing: **18.11.2004**

(54) **Method and apparatuses for the physical layer initialization of a link-based system interconnect**

Methode und Vorrichtung zur Initialisierung der physikalischen Ebene in einer Systemverbindung

Procédé et système pour initialiser la couche physique d'une interconnexion de système

(84) Designated Contracting States:
**AT BE BG CH CY CZ DE DK EE ES FI FR GB GR HU IE IS IT LI LU MC NL PL PT RO SE SI SK TR**

(30) Priority: **21.05.2004 US 850810**

(43) Date of publication of application:
**23.11.2005 Bulletin 2005/47**

(73) Proprietor: **INTEL CORPORATION**
**Santa Clara, CA 95052 (US)**

(72) Inventors:
• **Cherukuri, Naveen**
**San Jose,**
**California 95134 (US)**
• **Dunning, Davis S.**
**Portland,**
**Oregon 97229 (US)**
• **Schoenborn, Theodore Z.**
**Portland,**
**Oregon 97211 (US)**
• **Dabral, Sanjay**
**Palo Alto,**
**California 94303 (US)**
• **Frodsham, Tim**
**Portland,**
**Oregon 97229 (US)**

(74) Representative: **Molyneaux, Martyn William**
**Harrison Goddard Foote**
**40-43 Chancery Lane**
**London WC2A 1JA (GB)**

(56) References cited:
**US-A- 5 809 331**          **US-A1- 2002 103 995**

• **BUDRUK ET AL: "PCI Express System Architecture" PCI EXPRESS SYSTEM ARCHITECTURE, ADDISON-WESLEY, US, 30 September 2003 (2003-09-30), pages 94-95, XP002327974**

## Description

## FIELD

Embodiments of the invention relate generally to the field of processing systems employing a link-based interconnection scheme, and more specifically to state machines for initializing the physical layer portion of such processing systems.

## BACKGROUND

Increasing data processing requirements have led to the development of larger and more complicated applications executed on multiprocessing systems. Such systems may be implemented using a bus-based interconnection scheme. The bus-based interconnection scheme has distinct disadvantages in the areas of performance, scalability, and reliability. Performance for such a system suffers due to the length of the shared bus. That is, the length of the wire providing electrical connection between processors is dependent upon the number of processors in the multiple processor system (MPS). A greater number of processors and the length of the electrical connection, as well as the electrical loading of all other processors on the bus, reduces the effective speed at which the processors can be operated. Bus-based systems are not scalable in that the shared bus acts as a bottleneck when more processors are added. Moreover, the fact that all of the processors share a common bus means that if the bus fails for any reason, all of the processors are inoperable, thus reliability is jeopardized by the bus-based design.

To address these disadvantages, MPSs having a point-to-point, link-based interconnection scheme have been developed. Each node of such a system includes an agent (e.g., processor, memory controller, I/O hub component, chipsets, etc.) and a router for communicating data between connected nodes. The agents of such systems communicate data through use of an interconnection hierarchy that typically includes a protocol layer, an optional routing layer, a link layer, and a physical layer.

The protocol layer, which is the highest layer of the interconnection hierarchy, institutes the interconnection protocol, which is a set of rules that determines how agents will communicate with one another. For example, the interconnection protocol sets the format for the protocol transaction packet (PTP), which constitutes the unit of data that is communicated between nodes. Such packets typically contain information to identify the packet and indicate its purpose (e.g., whether it is communicating data in response to a request or requesting data from another node).

The routing layer determines a path over which data is communicated between nodes. That is, because each node is not connected to every other node, there are multiple paths over which data may be communicated between two particular nodes. The function of the routing layer is to specify the optimal path.

The link layer receives the PTPs from the protocol layer and communicates them in a sequence of chunks (portions). The size of each portion is determined by the link layer and represents a portion of a PTP whose transfer must be synchronized, hence each portion is known as a flow control unit (flit). A PTP is comprised of an integral and variable number of flits. The link layer handles the flow control, which may include error checking and encoding mechanisms. Through the link layer, each node is keeping track of data sent and received and sending and receiving acknowledgements in regard to such data.

The physical layer consists of the actual electronics and signaling mechanisms at each node. In point-to-point, link-based interconnection schemes, there are only two agents connected to each link. This limited electronic loading results in increased operating speeds. Operating speeds can be increased further by reducing the width of the physical layer interface (PLI) and thus the clock variation. The PLI is therefore typically designed to communicate some fraction of a flit on each of several clock cycles. The fraction of a flit that can be transferred across a physical interface in a single clock cycle is known as a physical control digit (phit). While flits represent logical units of data, a phit corresponds to a quantity of data transmitted in a unit interval.

The interconnection hierarchy is implemented to achieve greater system operating speed at the physical layer. The link layer is transmitting data (received as PTPs from the protocol layer) in flits, which are then decomposed into phits at the physical layer and are communicated over the PLI to the physical layer of a receiving agent. The received phits are integrated into flits at the physical layer of the receiving agent and forwarded to the link layer of the receiving agent, which combines the flits into PTPs and forwards the PTPs to the protocol layer of the receiving agent.

The electronics of the physical layer typically include some training logic that allows the physical layer of each node of a link to operate using the link. That is, the training logic allows the physical layers to calibrate their internal integrated circuit devices so that they are compatible with the link (i.e., the physical interconnect). This process is known as physical layer link initialization. Typical link initialization algorithms have many disadvantages. For example, typical initialization algorithms use predetermined count values to advance states and are therefore difficult to validate and debug. Some use an encoded link requiring that the data be encoded prior to transmission, and decoded when received. Additionally, typical initialization algorithms do not support many desirable features. For example, typical initialization algorithms require a complete re-initialization of the physical layer link after the link has been placed in a low-power mode

US2002/0103995 discloses to effect initialization of a physical layer link between two agents, comprising to train a link to operate with the reference clock and to provide for the exchange of parameters between two agents and to configure the link by negotiating a link width.

## SUMMERY OF INVENTION

The invention is defined by a method according to claim 1 and a system according to claim 12.

## BRIEF DESCRIPTION OF THE DRAWINGS

The invention may be best understood by referring to the following description and accompanying drawings that are used to illustrate embodiments of the invention. In the drawings:

Figure 1 illustrates a state machine for effecting a physical layer initialization in accordance with one embodiment of the invention;
Figure 2 illustrates the Detect operation in accordance with one embodiment of the invention;
Figure 3 illustrates the Polling operation in accordance with one embodiment of the invention;
Figure 4 illustrates the Configuration operation in accordance with one embodiment of the invention;
Figure 5 illustrates a process by which a reduced-width link is configured in accordance with one embodiment of the invention;
Figure 6 illustrates a state machine for effecting a physical layer initialization that supports two low-power modes in accordance with one embodiment of the invention;
Figure 7 illustrates the connection of two agents in which the lane connections have been reversed in accordance with one embodiment of the invention; and
Figure 7A illustrates the connection of two half-width ports of a bifurcated port to two independent agents each having a half-width port, in which the lane connections have been reversed in accordance with one embodiment of the invention.

## DETAILED DESCRIPTION

In the following description, numerous specific details are set forth. However; it is understood that embodiments of the invention may be practiced without these specific details. In other instances, well-known circuits, structures and techniques have not been shown in detail in order not to obscure the understanding of this description.
Reference throughout the specification to "one embodiment" or "an embodiment" means that a particular feature, structure, or characteristic described in connection with the embodiment is included in at least one embodiment of the present invention. Thus, the appearance of the phrases "in one embodiment" or "in an embodiment" in various places throughout the specification are not necessarily all referring to the same embodiment. Furthermore, the particular features, structures, or characteristics may be combined in many suitable manner in one or more embodiments.
Moreover, inventive aspects lie in less than all features of a single disclosed embodiment. Thus, the claims following the Detailed Description are hereby expressly incorporated into this Detailed Description, with each claim standing on its own as a separate embodiment of this invention.
Throughout the specification, the terms node and agent are used generally interchangeably, while it is to be understood that a particular agent may have one or more ports associated therewith.

## PHYSICAL LAYER INITIALIZATION

A portion of the PLI logic is used to effect link training and calibration. In an alternative embodiment, the logic that effects the training resides on the link layer. The training logic allows the physical layer on each side of the link to be calibrated in order to begin using the link. That is, the internal semiconductor devices are calibrated to be compatible with the I/O link of the PLI. The initial calibration procedure is referred to as initialization of the physical layer. This initialization is effected in a sequence of stages with the initialization of each subsequent stage requiring the training of I/O circuitry in a previous stage.

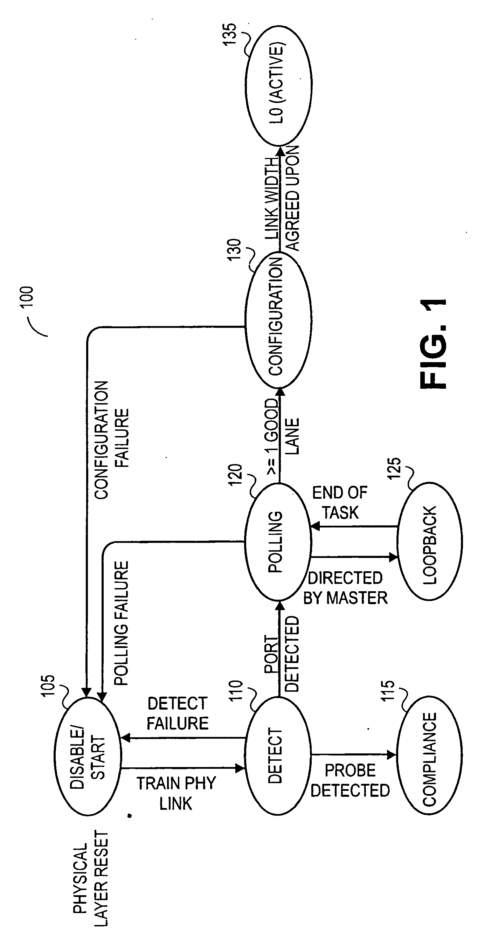

Figure 1 illustrates a state machine for effecting a physical layer initialization in accordance with one embodiment of the invention. State machine 100 shown in Figure 1, represents an initialization sequence starting with Disable/Start operation 105. The Disable/Start state 105 is entered at power-on or in response to any physical layer reset event. For one embodiment, while disabled, all lanes of the PLI are off and in a low power state.
Upon starting, the PLI performs a Detect operation 110 to detect an interconnected agent. The Detect operation 110 is the point at which two agents are synchronized to commence link initialization. The Detect operation 110 determines if there is another physical layer agent (i.e., the physical layer of another agent) at the other end of the link. That is, the agent on the other side of the link may be powered down in which case there is no need to initialize the link. The Detect operation 110 may be extended for a specified time period to allow for each interconnected agent to receive power. That is, because when the system is powered up, one component may receive power slightly (e.g., several nanoseconds) earlier than another, therefore the Detect operation may be extended to accommodate such discrepancies. If no agent is detected, initialization need not be effected at that time.

## DETECT

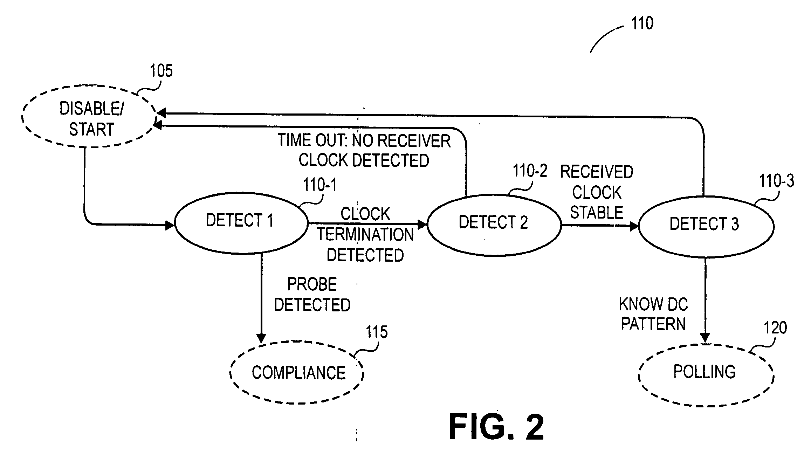

Figure 2 illustrates the Detect operation in accordance with one embodiment of the invention. As shown in Figure 2, the Detect operation 110 has three sub-states, namely Detect 110-1, Detect 110-2, and Detect 110-3.

In accordance with one embodiment of the invention, the physical layer can distinguish between detection of an interconnected agent and a test probe (e.g. a 50 ohm test probe). A test probe may be used for debugging operation when the link fails to initialize. Thus one embodiment of the invention provides the capability to distinguish between a test probe and another physical layer agent at this early stage in the initialization process. In Detect 110-1, the port checks for the presence of an active agent or passive test probe at the other end of the link. If, during Detect 110-1, a test probe is detected, then Compliance operation 115 is performed. During Compliance operation 115, a test pattern is repeatedly transmitted on all lanes that have detected a probe. The test pattern may be used by a test probe to measure signal quality on the link. In accordance with one embodiment of the invention, the Compliance operation is extended indefinitely, the transmitter (Tx) exiting from compliance state only upon link reset. If, at Detect 110-1, the local port detects a remote receiver (Rx) clock, the state is advanced to Detect 110-2.

In Detect 110-2, the local port activates a forwarded clock and begins locking to the received clock. A forwarded clock is an explicit clock signal transmitted, along with the data on the physical interconnect using dedicated clock pins. If at the end of some specified time, the received clock is not detected, the local port abandons the initialization sequence and resets to operation Disable/Start 105. For one embodiment of the invention, an initialization retry threshold counter is incremented prior to reset.

In accordance with one embodiment of the invention, a noise suppression technique is employed in which the actual signal is represented by a differential pair. For example, 40 wires maybe used to represent 20 signals, with each signal being determined by the difference of a pair of signals (differential pair). The 1/0 values driven on the D+/D- halves of the differential pair on each Tx lane is referred to as a known DC pattern.

In Detect 110-3, if the known DC pattern is not observed for a specified period, the local port abandons the initialization sequence and resets to operation Disable/Start 105. For one embodiment of the invention, an initialization retry threshold counter is incremented prior to reset. The Detect 110-3 is effected to determine polarity inversion discussed in more detail below.

If the known DC pattern is observed, the physical layer has detected an agent and the training sequence is continued and Polling operation 120 is performed. That is, upon detecting each other, the interconnected agents begin interactive training. During Polling operation 120, the link is trained to operate with the high-speed clock used to select between the two interconnected agents. The Polling operation is described in greater detail below.

POLLING

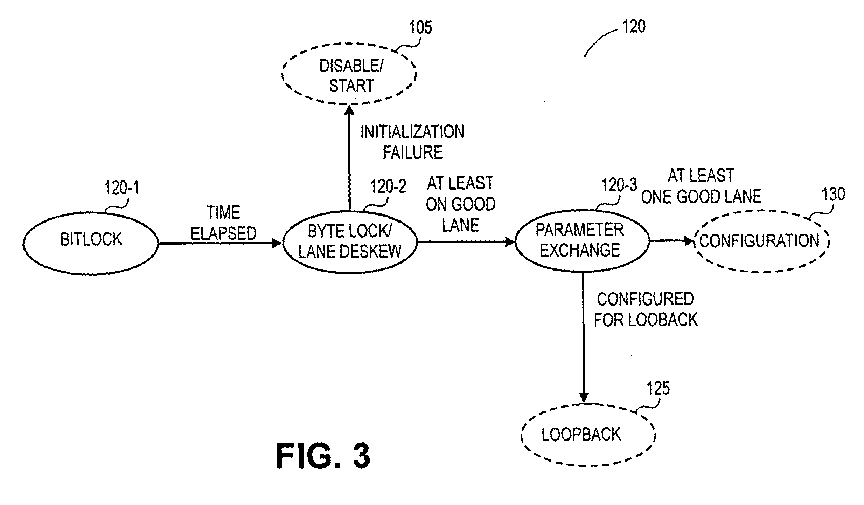

Figure 3 illustrates the Polling operation in accordance with one embodiment of the invention. As shown in Figure 3, Polling operation 120 includes three sub-states, namely Polling 120-1 to effect bit lock, Polling 120-2 to effect byte-lock and lane deskew and identify faulty lanes, and Polling 120-3 to effect parameter exchange.

In digital timing, a reference clock is used to read the incoming data on each wire, that is, the clock is common to all wires. Due to the high speeds possible with a point-to-point, link-based interconnection scheme, variations in the length of the physical traces within the IC that connect different lanes of the link and variations on the PCB, could cause the clock to be significantly different with respect to the data communicated on different lanes of the link. Calibration is required to address these variations. Bit locking trains the Rx I/O circuits to reliably receive a/c signals.

At Polling 120-1, copies of the reference clock are made for each data lane. The clock for each data lane is then moved so that its edge is aligned with the center of the corresponding data lane. For one embodiment, all data Tx that detected a remote data Rx termination drive a clock pattern starting with a 0. Each local data Rx then aligns its strobe position to align with the incoming clock pattern. For one embodiment, the bit-lock sub-state does not generate a handshake, but the local port advances to the next polling sub-state upon expiration of a specified time.

This fine-tuning addresses delays that are less than one clock cycle but is not effective where the delay is one or more whole clock cycles. At Polling 120-2, a training sequence (an identical known pattern) is transmitted on each of the lanes of a link. Each local Rx uses the header of the training sequence to identify the training sequence boundary. Thus, the training sequence can be used to address full-clock cycle delays. The training sequence of Polling 120-2 can also be used to identify faulty lanes. Once at least one local Rx has received two consecutive training sequences, all of the good RX lanes should have received one. Therefore, at this point, any local Rx lanes that have not seen a training sequence header can be disabled. The training sequence is also used to effect lane-to-lane deskew. For one embodiment of the invention, deskew buffers use the training sequence header to determine the relative skew between lanes. Read pointers of the deskew buffers are then adjusted to offset the determined skew. After lane deskew is accomplished, an acknowledgement is sent on the outbound training sequence.

At Polling 120-3, the physical layers of the agent on each side of the link exchange parameters using a second training sequence. If the Rx doesn't receive the training sequence, this indicates a problem. Since the I/O has been calibrated to work with each lane separately, if there is anything broken either in the IC circuitry or the physical interconnect between agents, the receiving port will be aware of this. In the parameter exchange of Polling 120-3, if the link was configured to run in loopback (a test mode for implementing advanced test schemes (e.g., built-in self test), the loopback master and slave are identified. If configured for loopback, both agents enter loopback mode)(Loopback operation 125) upon link initialization. One embodiment of the invention includes a control register having a loopback mode bit that may be set by either agent. The port that sets the loopback mode bit becomes the loopback master and the other port becomes the loopback slave. Where both ports set the loopback mode bit, initialization failure results.

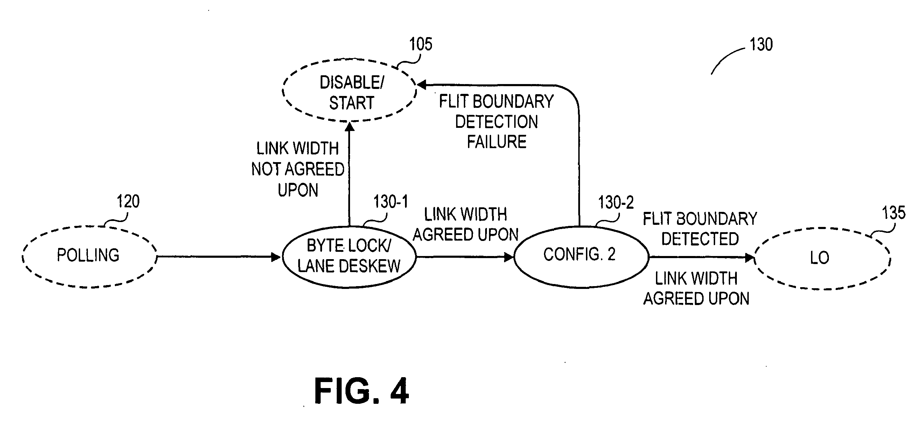

Figure 4 illustrates the Configuration operation in accordance with one embodiment of the invention. As shown in Figure 4, Configuration operation 130 includes two sub-states, namely Config 130-1 to effect the exchange of faulty lane information, and Config 130-2 to set the flit boundary.

As described above, there may be a situation in which some of the lanes of a link are disabled. This may be due to faulty links or as a part of a power saving scheme. At Config 130-1, all of the information regarding faulty lanes that was acquired during polling is used to configure the link into viable quadrants in order to keep the link functioning even if at reduced efficiency. The total lanes of the link (e.g., 20 lanes) are divided into quadrants of 5 lanes each. The physical layer can then be operated using any combination of quadrants. For one embodiment of the invention, the physical layer is operated using any one quadrant, any combination of two quadrants, or all quadrants. Operating a reduced-width link requires a corresponding increase in the number of clock cycles to transmit a flit. For example, in normal operation, an 80-bit flit is transmitted in four clock cycles over a 20-lane link (each phit is 20 bits). For a reduced-width link having five lanes (one quadrant), a proportionally smaller phit (5-bit) is transmitted and a proportionately higher number of clock cycles (16) are required to transmit the flit

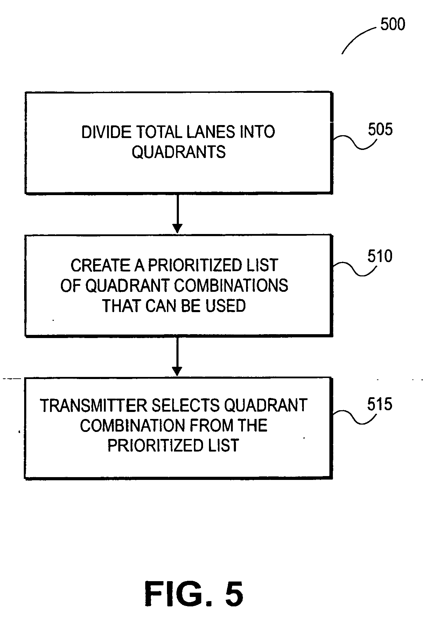

Figure 5 illustrates a process by which a reduced-width link is configured in accordance with one embodiment of the invention. Process 500, shown in Figure 5, begins at operation 505 in which the lanes of a link are divided into quadrants and viable quadrants are determined. For example, a 20-lane link is divided into quadrants of 5 lanes each. If any lane of a quadrant is disabled, that quadrant is not viable and will not used.

At operation 510, the Rx determines its ability based upon viable quadrants and creates a prioritized list of quadrant combinations that it can operate with. For example, if only one quadrant is viable, the list contains this quadrant, if two quadrants are viable, the list contains each quadrant individually, as well as the combination of the two. If three quadrants are viable, the list contains each of the three individually, as well as combinations of two of the three. The Rx then transmits this list to the Tx.

Moreover, the Rx may require a reduced-width link for other reasons than faulty lanes (e.g., as part of a power saving scheme).

At operation 515, the Tx selects a quadrant combination and establishes a reduced-width link. This allows the system to continue to function in a degraded mode as opposed to shutting down or may be used to support a power saving scheme.

Process 500, in which a prioritized list of viable quadrant combinations is created allows quick transition to a reduced-width (e.g., half-width or quarter-width) link to effect greater power savings. That is, the system can dynamically modulate link width to conserve power because, while operating in full-width mode, the power-saving configuration is known and the system can transition quickly to a reduced-width link.

Referring again to Figure 4, if the link width cannot be agreed upon, the initialization sequence is abandoned and reset to operation Disable/Start 105

The training sequence is being sent serially on each of the links and the Tx is aware of the number of training sequences to send. However, the Tx and the Rx are not necessarily in lock-step. That is, because the number of training sequences is not fixed, the Rx cannot know when the last training sequence from the Tx will arrive. This may result in the Rx viewing a portion of the training sequence as a phit of a flit from the link layer or reading a flit from an incorrect phit. To address this situation, once the link width is agreed on, the transmit port sends a third training sequence with a redundant acknowledgement field at operation 130-2. The flit boundary is set by synchronizing this training sequence between local and remote ports. For one embodiment, the redundant acknowledgement field of the training sequence is a three-bit field, in addition to the acknowledgement filed used for transitioning states. In the last training all three bits of the redundant acknowledgement field are set to 1, indicating to the receiver that this is the last training sequence to be transmitted. Without such redundancy initialization failure may occur. For one embodiment, the receiver interprets the last training sequence if two of the three redundant acknowledgement bits are set to 1, thus, tolerating a single bit failure in the transmission of the last training sequence. For alternative embodiments, any desired number of bits may be used for the redundant acknowledgement field with a specified number resulting in interpretation of last training sequence. So, once the port has sent and received this third training sequence, link initialization is complete and the link layer takes control of the port at this point at state L0 135. During initialization, special training sequences are used and are transmitted sequentially on each of the lanes. After the active state is reached, a parallel model is used in which flits (decomposed into phits) are transmitted in parallel on all lanes.

The physical layer electronics are still active, but engaged in decomposing the flits on one side of the link and reconstructing them on the other side of the link.

The physical layer is no longer involved in training and operates under the direction of the link layer in state L0 to transfer data across the link.

## GENERAL MATTERS

Embodiments of the invention provide a state machine for physical layer initialization of a link-based interconnection scheme. Embodiments of the invention avoid using pre-defined counts to advance states, instead advancing states use an explicit handshake. Thus embodiments of the invention require fewer comparators than typical prior art schemes, as only one state header needs to be searched. Embodiments of the invention initialize the logic functionality of the physical layer and provide the I/O electrical calibration to establish and operate a reliable link. Alternative embodiments of the invention provide initialization for physical layers having varied logic feature sets.

## LOW-POWER MODES

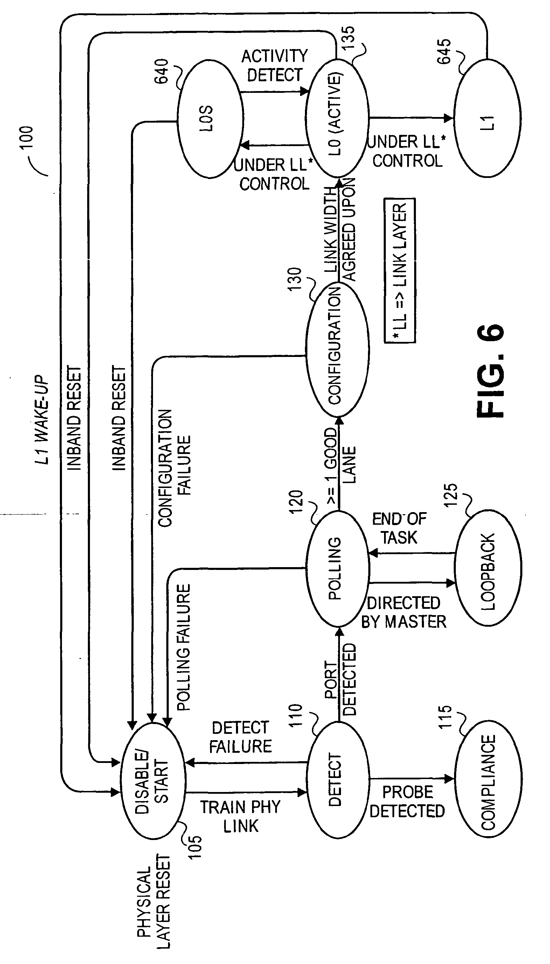

For one embodiment of the invention, the physical layer may enter a low-powered mode. Figure 6 illustrates a state machine for effecting a physical layer initialization that supports two low-power modes in accordance with one embodiment of the invention. State machine 600, shown in Figure 6, represents an initialization sequence including a Disable/Start operation 105, a Detect operation 110, a Compliance operation 115, a Polling operation 120, a Loopback operation 125, a Configuration operation 130, and an active state L0, as described above in reference to Figure 1. As shown in Figure 6, state machine 600 also includes two low power states L0S 640 and L1 645.

The low power modes are used to save power when the system will be dormant for some time. Each low-power mode has a pre-determined reactivation time (wake-up time). L0S 640 has a relatively short wake-up time (e.g., 20 ns) for relatively short dormancy periods. Therefore in L0S 640, less of the circuitry is turned off. L1 has a relatively longer wake-up time (e.g., 10 $\mu$s) for relatively longer dormancy periods. The low power mode used is dependent upon the expected dormancy pattern of the system.

## HOT PLUG SUPPORT

As described above, in reference to the Detect operation 110 of Figure 1, alternative embodiments of the invention provide a PLI that can distinguish between detection of an interconnected agent and a test probe. For one embodiment, the Detect operation is continued indefinitely until either another agent, or a test probe, is detected. Such continual detection provides hot-plug support while consuming no additional power. For example, if an agent is removed from one side of a link, the remaining agent continuously performs a detect operation until an agent (or test probe) is detected. This allows a faulty component to be removed and replaced without shutting down the entire system. Moreover, the system detects a hot plug immediately in contrast to the prior art scheme of periodically polling the link.

## POLARITY INVERSION

Various alternative embodiments of the invention provide for polarity inversion (where the D+/D- halves of the differential pair are swapped on the physical interface) to reduce platform design complexity (e.g., by implementing lane reversal). Polarity inversion is detected by each Rx in the Detect 110-3 state described above in reference to Figure 2, and a correction is automatically effected by the Rx upon detection. For one embodiment of the invention, the polarity inversion is detected on an individual lane basis, independent of other lanes. For such an embodiment, the local Rx looks for the known DC pattern or the 1's complement of the known DC pattern on each of the received differential pairs. All Rx lanes that detect the known DC pattern, or the 1's complement thereof, are advanced to polling; any others are disabled and will not be available until a subsequent link initialization is effected.

## LANE REVERSAL

Ideally, pins providing the physical signals on each of two interconnected agents are connected to the corresponding pin on the other agent. That is, for a pair 20-pin agents, pins 0-19 on one agent are connected to pins 0-19 on the other agent. Such a connection may lead to excessive board layout congestion or complexity for some topologies. An embodiment of the invention allows pins on one port to be reversed with respect to the pins on the other port. Such lane reversal is defined by the following pin connection equation between two ports, A and B

$$\text{Pin } k_{\text{component A}} => \text{Pin } (N_L\text{-}k\text{-}1)_{\text{component B}}$$

Lane reversal is automatically detected and compensated for by the Rx port. No additional steps are required on the board as long as the agents are connected through corresponding pins (straight connection) or through the above-noted pin connection equation for lane reversal.

For one embodiment of the invention, the lane identifiers for each lane of a straight connection differ in only one bit from the lane identifiers of a reversed lane connection. That is, since the lanes are restricted to one of only two locations their identifiers can be the same except for one bit. In such an embodiment, lane reversal can be detected by comparing the single bit.

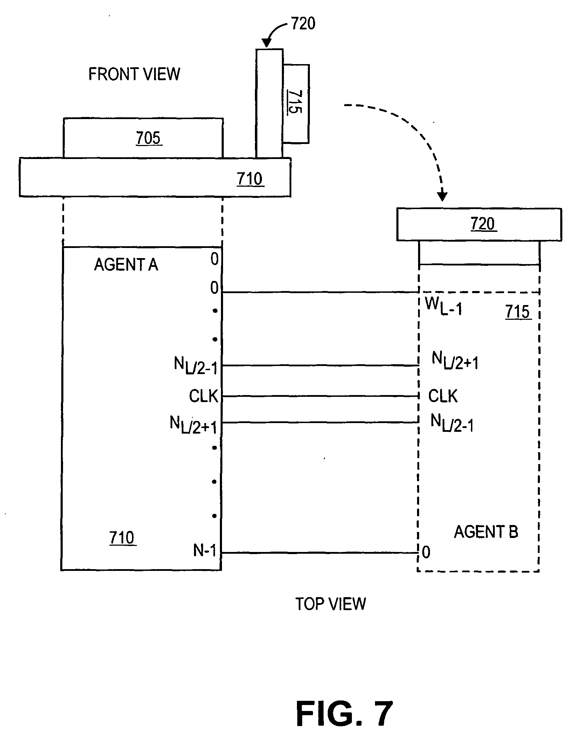

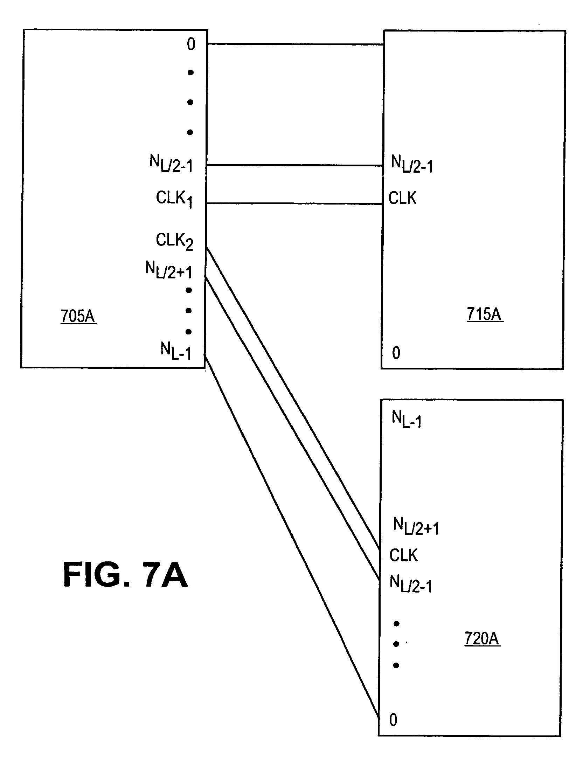

Figure 7 illustrates the connection of two agents in which the lane connections have been reversed in accordance with one embodiment of the invention. As shown in Figure 7, agent 705 residing on motherboard 710 is connected to agent 715 residing on daughter card 720. In accordance with one embodiment of the invention, the pins 0 through $N_L$-1 of agent 705 are connected to pins $N_L$-1 through 0, respectively, of agent 715. The pin reversal is detected during Polling and automatically compensated for with a corresponding reversal within the IC.

PORT BIFURCATION

Embodiments of the invention support port bifurcation, which allows a full width agent to divide itself into two agents, each with half-width links. For example, for some system platforms, the traffic on the I/O is not as much as the traffic between processors. Therefore, for a system with two processors, instead of each processor having its own dedicated I/O component, it is possible for the two processors to share a single I/O component in terms of interconnections In such case, the two processors communicate with each other using a 20-bit wide interconnect (20 lanes), but the I/O agent allocates 10 of its 20 lanes to communication with one processor and the other 10 lanes to communication with the other processor. For one embodiment of the invention, port bifurcation is effected through pin straps prior to link initialization and the configuration remains static. For one embodiment of the invention, the bifurcated port has two clock lanes (one for each half-width link) at the center of the pin field. For one embodiment of the invention, a port capable of bifurcation is also capable of operating as a single full-width link. For such an embodiment, the extra clock pin may be unconnected or may be hardwired to either Vcc or Vss. Embodiments of the invention support lane reversal on a bifurcated port. Each half of a bifurcated port supports lane reversal independent of the other. Figure 7A illustrates the connection of two half-width ports of a bifurcated port to two independent agents each having a half-width port, in which the lane connections have been reversed in accordance with one embodiment of the invention. As shown in figure 7, agent 705A is bifurcated and has two clock lanes, clk1 and clk2 at the center of the pin field. The pins comprising one half-width bifurcated port are connected in reverse order to agent 715A while the pins comprising the other half-width bifurcated port are connected in reverse order to agent 720A. For an alternative embodiment, a system platform may implement lane reversal on one half-width bifurcated port and straight connection on the other half-width bifurcated port.

Embodiments of the invention include a state machine with various states and methods with various operations. These are described in their most basic form, but states or operations can be added to or deleted from any of the state machines or methods, respectively, without departing from the basic scope of the invention. The states and operations of the invention may be effected by hardware components or may be embodied in machine-executable instructions as described above. Alternatively, they may be performed by a combination of hardware and software. The invention may be provided as a computer program product that may include a machine-accessible medium having stored thereon instructions, which may be used to program a computer (or other electronic devices) to perform a process according to the invention as described above.

A machine- accessible medium includes any mechanism that provides (i.e., stores and/or transmits) information in a form accessible by a machine (e.g., a computer, network device, personal digital assistant, manufacturing tool, any device with a set of one or more processors, etc.). For example, a machine- accessible medium includes recordable/non-recordable media (e.g., read only memory (ROM); random access memory (RAM); magnetic disk storage media; optical storage media; flash memory devices; etc.), as well as electrical, optical, acoustical or other form of propagated signals (e.g., carrier waves, infrared signals, digital signals, etc.); etc.

While the invention has been described in terms of several embodiments, those skilled in the art will recognize that the invention is not limited to the embodiments described, but can be practiced with modification and alteration within the scope of the appended claims. The description is thus to be regarded as illustrative instead of limiting.

**Claims**

1.  A method to effect initialization of a physical layer link between two agents comprising:

    entering a detect state and remaining in the detect state until either a physical agent is detected or a test probe is detected;
    advancing to a polling state upon detecting a physical agent, the polling state to train a link to operate with the reference clock and provide for the exchange of parameters between the two agents; and
    advancing to a configuration state, the configuration state to negotiate a link width and set a flit boundary.

2.  The method of claim 1 further comprising:

    advancing to an active state upon successfully negotiating the link width and setting the flit boundary, the active state enabling a link layer to transmit and receive data.

3.  The method of claim 1 wherein the two agents are components selected from the group consisting of a processor, a memory controller, an input/output hub component, a chipset, and combinations thereof.

4. The method of claim 1 wherein upon detecting a test probe in the detect state, a test pattern is transmitted on all lanes that detected a test probe.

5. The method of claim 1 wherein training the link to operate with the reference clock includes effecting bit lock, byte lock, and lane deskew between the two agents.

6. The method of claim 5 wherein the parameters exchanged between the two agents include faulty lane information.

7. The method of claim 6 wherein negotiation of the link width is based upon the faulty lane information.

8. The method of claim 2 wherein the initialization is abandoned prior to advancing to the active state upon the occurrence of a restart event.

9. The method of claim 8 wherein the restart event is selected from the group consisting of specified detect time elapsed, known DC detect pattern not observed, failure to effect byte lock, failure to successfully negotiate link width, and failure to set flit boundary.

10. The method of claim 2 further comprising:

   entering a selected one of one or more low power modes, at least one low power mode having a specified corresponding reactivation time.

11. The method of claim 10 wherein the low power mode selected is dependent upon an expected dormancy pattern.

12. A system comprising:

   a plurality of agents interconnected through a point-to-point link-based interconnection scheme;
   a state machine implemented on each of the agents for initializing a physical layer of a link connecting two of the plurality of agents, the state machine including:

      a detect state to detect a physical layer of another agent across the link, the detect state capable of discerning between the physical layer of another agent and a test probe;
      a polling state to train a link to operate with the reference clock and provide for the exchange of parameters between the two agents; and
a configuration state to negotiate a link width and set a flit boundary.

13. The system of claim 12 wherein the plurality of agents are components selected from the group consisting of a processor, a memory controller, an input/output hub component, a chipset, and combinations thereof.

14. The system of claim 13 wherein training the link to operate with the reference clock includes effecting bit lock, byte lock, and lane deskew between the two agents.

15. The system of claim 14 wherein the parameters exchanged between the two agents include faulty lane information.

16. The system of claim 12 wherein a set of pins of a first agent are connected to a set of pins of a second agent in reverse order.

17. The system of claim 16 wherein the connection order is indicated by a single bit.

18. A data medium having stored thereon computer product code adapted to perform all the steps of any one of claims 1 to 11 when said program code is run on a computer.

19. A computer program comprising computer code means adapted to perform all the steps of claims 1 to 11 when that program is run on a computer.

**Patentansprüche**

1. Verfahren zum Bewirken einer Initialisierung einer Bitübertragungsschichtverbindung zwischen zwei Agenten, wobei das Verfahren folgendes umfasst:

   das Eintreten in einen Erkennungszustand und das Verbleiben in dem Erkennungszustand, bis einer der physikalischen Agenten oder eine Testsonde erkannt worden ist;
   das Wechseln in einen Abrufzustand nach dem Erkennen eines physikalischen Agenten, wobei der Abrufzustand dazu dient, eine Verbindung so zu schulen, dass sie in Verbindung mit dem Referenztakt arbeitet und den Austausch von Parametern zwischen den beiden Agenten bereitstellt; und
   das Wechseln in einen Konfigurationszustand, wobei der Konfigurationszustand zum Aushandeln der Verbindungsbreite und der Festlegung einer Flit-Begrenzung dient.

**2.** Verfahren nach Anspruch 1, wobei dieses ferner folgendes umfasst:

das Wechseln in einen aktiven Zustand nach dem erfolgreichen Aushandeln der Verbindungsbreite und der Festlegung der Flit-Begrenzung, wobei der aktive Zustand eine Verbindungsschicht in die Lage versetzt, Daten zu übermitteln und zu empfangen.

**3.** Verfahren nach Anspruch 1, wobei die beiden Agenten Komponenten darstellen, die aus der Gruppe ausgewählt werden, welche einen Prozessor, eine Speichersteuereinheit, eine Ein-Ausgabe-Hub-Komponente, einen Chipsatz und Kombinationen dieser umfasst.

**4.** Verfahren nach Anspruch 1, wobei nach dem Erkennen einer Prüfsonde in dem Erkennungszustand ein Prüfmuster auf allen Spuren, die eine Prüfsonde detektiert haben, übermittelt wird.

**5.** Verfahren nach Anspruch 1, wobei das Schulen der Verbindung für einen Betrieb in Verbindung mit dem Referenztakt das Bewirken eines Bit-Lock, eines Byte-Lock und einer Spurentzerrung zwischen den beiden Agenten aufweist.

**6.** Verfahren nach Anspruch 5, wobei die zwischen den beiden Agenten ausgetauschten Parameter fehlerhafte Spurinformationen aufweisen.

**7.** Verfahren nach Anspruch 6, wobei die Aushandlung der Verbindungsbreite auf den fehlerhaften Spurinformationen basiert.

**8.** Verfahren nach Anspruch 2, wobei die Initialisierung aufgegeben wird, bevor nach dem Auftreten eines Neustartereignisses in den aktiven Zustand gewechselt wird.

**9.** Verfahren nach Anspruch 8, wobei das Neustartereignis aus der Gruppe ausgewählt wird, welche die abgelaufene spezifizierte Erkennungszeit, ein nicht beobachtetes bekanntes Gleichstromerkennungsmuster, das Versagen des Bewirkens eines Byte-Lock, das Versagen der erfolgreichen Aushandlung der Verbindungsbreite und das Versagen des Festlegens der Flit-Begrenzung umfasst.

**10.** Verfahren nach Anspruch 2, wobei das Verfahren ferner folgendes umfasst:

das Eintreten in einen ausgewählten eines oder mehrerer Niederleistungsmodi, wobei mindestens ein Niederleistungsmodus eine spezifizierte entsprechende Reaktivierungszeit aufweist.

**11.** Verfahren nach Anspruch 10, wobei der ausgewählte Niederleistungsmodus abhängig ist von dem erwarteten Ruhezustandsmuster.

**12.** System, das folgendes umfasst:

eine Mehrzahl von Agenten, die über ein Verbindungsmuster auf der Basis von Punktzu-Punkt-Verbindungen miteinander verbunden sind;
eine an jedem der Agenten implementierte Zustandsmaschine zum Initialisieren einer Bitübertragungsschicht einer Verbindung, die zwei der Mehrzahl von Agenten verbindet, wobei die Zustandsmaschine folgendes aufweist:

einen Erkennungszustand zum Erkennen einer Bitübertragungsschicht eines anderen Agenten über die Verbindung, wobei der Erkennungszustand zwischen der Bitübertragungsschicht eines anderen Agenten und einer Prüfsonde unterscheiden kann;
einen Abrufzustand zum Schulen einer Verbindung für den Betrieb in Verbindung mit dem Referenztakt sowie zur Bereitstellung des Austauschs von Parametern zwischen den beiden Agenten; und
einen Konfigurationszustand zum Aushandeln einer Verbindungsbreite und zum Festlegen einer Flit-Begrenzung.

**13.** System nach Anspruch 12, wobei die Mehrzahl von Agenten Komponenten darstellt, die aus der Gruppe ausgewählt werden, die einen Prozessor, eine Speichersteuereinheit, eine Ein-Ausgabe-Hub-Komponente, einen Chipsatz und Kombinationen dieser umfasst.

**14.** System nach Anspruch 13, wobei das Schulen der Verbindung für einen Betrieb in Verbindung mit dem Referenztakt das Bewirken eines Bit-Lock, eines Byte-Lock und einer Spurentzerrung zwischen den beiden Agenten aufweist.

**15.** System nach Anspruch 14, wobei die zwischen den beiden Agenten ausgetauschten Parameter fehlerhafte Spurinformationen aufweisen.

**16.** System nach Anspruch 12, wobei eine Reihe von Stiften eines ersten Agenten mit einer Reihe von Stiften eines zweiten Agenten in umgekehrter Anordnung verbunden ist.

**17.** System nach Anspruch 16, wobei die Verbindungsanordnung durch ein einziges Bit angezeigt wird.

**18.** Datenmedium, auf dem Computerproduktcode gespeichert ist, der alle Schritte eines der Ansprüche 1 bis 11 ausführen kann, wenn der genannte Programmcode auf einem Computer ausgeführt wird.

**19.** Computerprogramm, das eine Computercodeeinrichtung umfasst, die alle Schritte der Ansprüche 1 bis 11 ausführen kann, wenn das Programm auf einem Computer ausgeführt wird.

**Revendications**

**1.** Procédé pour effectuer l'initialisation d'un lien de couche physique entre deux agents comprenant les étapes consistant à :

entrer dans un état de détection et rester dans l'état de détection jusqu'à ce qu'un agent physique soit détecté ou qu'une sonde de test soit détectée ;
avancer à un état d'interrogation en détectant un agent physique, l'état d'interrogation amenant un lien à fonctionner avec l'horloge de référence et à fournir l'échange de paramètres entre les deux agents ; et
avancer à un état de configuration, l'état de configuration négociant une largeur de lien et fixant une limite.

**2.** Procédé selon la revendication 1, comprenant en outre les étapes consistant à :

avancer à un état actif après avoir négocié avec succès la largeur de lien et avoir réglé la limite, l'état actif permettant à une couche de lien de transmettre et de recevoir des données.

**3.** Procédé selon la revendication 1, dans lequel les deux agents sont des composants sélectionnés dans le groupe comprenant un processeur, un contrôleur de mémoire, une composant de hub d'entrée/de sortie, un jeu de puces, et des combinaisons de ces composants.

**4.** Procédé selon la revendication 1, dans lequel après la détection d'une sonde de test dans l'état de détection, un modèle de test est transmis sur toutes les lignes ayant détecté une sonde de test.

**5.** Procédé selon la revendication 1, dans lequel le fait d'amener le lien à fonctionner avec l'horloge de référence comprend l'étape consistant à effectuer verrouillage de bits, verrouillage d'octets, et correction de désalignement de ligne entre les deux agents.

**6.** Procédé selon la revendication 5, dans lequel les paramètres échangés entre les deux agents comprennent des informations de ligne défectueuse.

**7.** Procédé selon la revendication 6, dans lequel la négociation de la largeur de lien est basée sur les informations de ligne défectueuse.

**8.** Procédé selon la revendication 2, dans lequel l'initialisation est abandonnée avant d'avancer à l'état actif en cas d'occurrence d'un événement de redémarrage.

**9.** Procédé selon la revendication 8, dans lequel l'événement de redémarrage est sélectionné parmi le groupe comprenant temps de détection spécifié écoulé, modèle de détection DC connu non observé, non-réalisation d'un verrouillage d'octets, non-réalisation d'une négociation réussie d'une largeur de lien, et non-réalisation d'un réglage de limite.

**10.** Procédé selon la revendication 2, comprenant en outre l'étape consistant à :

entrer dans l'un d'un ou de plusieurs modes de faible consommation, au moins un mode de faible consommation ayant un temps de réactivation correspondant spécifié.

**11.** Procédé selon la revendication 10, dans lequel le mode de faible consommation sélectionné dépend d'un modèle de dormance attendu.

**12.** Système comprenant :

une pluralité d'agents interconnectés via un schéma d'interconnexion basé sur lien point à point ;
une machine d'état mise en oeuvre sur chacun des agents pour initialiser une couche physique d'un lien connectant deux de la pluralité d'agents, la machine d'état comprenant :

un état de détection pour détecter une couche physique d'un autre agent sur le lien, l'état de détection étant capable de distinguer la couche physique d'un autre agent d'une sonde de test ;
un état d'interrogation pour amener un lien à fonctionner avec l'horloge de référence et à fournir l'échange de paramètres entre les deux agents ; et
un état de configuration pour négocier une largeur de lien et régler une limite.

**13.** Système selon la revendication 12, dans lequel la pluralité d'agents sont des composants sélectionnés dans le groupe comprenant un processeur, un contrôleur de mémoire, un composant de hub d'entrée/de sortie, un jeu de puces, et une combinaison de ceux-ci.

**14.** Système selon la revendication 13, dans lequel amener le lien à fonctionner avec l'horloge de référence comprend l'étape consistant à effectuer verrouillage de bits, verrouillage d'octets, et correction de désalignement de ligne entre les deux agents.

**15.** Système selon la revendication 14, dans lequel les paramètres échangés entre les deux agents incluent des informations de ligne défectueuse.

**16.** Système selon la revendication 12, dans lequel un jeu de broches d'un premier agent est connecté à un jeu de broches d'un second agent dans l'ordre inverse.

**17.** Système selon la revendication 16, dans lequel l'ordre de connexion est indiqué par un bit unique.

**18.** Support de données sur lequel est stocké un code de produit informatique adapté pour réaliser toutes les étapes de l'une quelconque des revendications 1 à 11 lorsque ledit code de programme est réalisé sur un ordinateur.

**19.** Programme informatique comprenant des moyens de code informatique adaptés pour réaliser toutes les étapes des revendications 1 à 11 lorsque ce programme est exécuté sur un ordinateur.

FIG. 1

EP 1 598 742 B1

FIG. 2

FIG. 3

**FIG. 4**

500

```
┌─────────────────────────────┐
│   DIVIDE TOTAL LANES INTO    │  ⌇ 505
│         QUADRANTS            │
└─────────────────────────────┘
               │
               ▼
┌─────────────────────────────┐
│   CREATE A PRIORITIZED LIST  │  ⌇ 510
│  OF QUADRANT COMBINATIONS    │
│       THAT CAN BE USED       │
└─────────────────────────────┘
               │
               ▼
┌─────────────────────────────┐
│ TRANSMITTER SELECTS QUADRANT │  ⌇ 515
│    COMBINATION FROM THE      │
│       PRIORITIZED LIST       │
└─────────────────────────────┘
```

# FIG. 5

FIG. 6

FIG. 7

**FIG. 7A**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20020103995 A